# EUROPÄISCHE PATENTANMELDUNG

(11) **EP 2 514 310 A1**
(43) Veröffentlichungstag der Anmeldung: **24.10.2012**
(21) Anmeldenummer: 12163096.6
(22) Anmeldetag: 12.09.2006
(51) Int. Cl.: A01N 37/46, A01N 47/02, A01P 3/00, A01P 7/04

(54) **Verfahren zum Schutz vor Phytopathogenen mit Kiralaxyl, entsprechende Verwendung und Mittel hierzu**

(30) Priorität: 13.09.2005 DE 102005043652
(62) Teilanmeldung aus: 06792008.2
(71) Anmelder: ISAGRO S.p.A., 20153 Milano (IT)
(72) Erfinder: Gewehr, Markus, 56288 Kastellaun (DE); Burgers, Jan, Willem, 67434 Neustadt (DE); Wilhelm, Ronald, 65719 Hofheim (DE)
(74) Vertreter: Bottero, Carlo

(57) **Zusammenfassung**

Die Erfindung betrifft ein Verfahren zum Schutz vor Phytopathogenen, das die Behandlung von Saatgut mit Kiralaxyl (Methyl-*N*-(phenylacetyl)-*N*-(2,6-xylyl)-D-alaninat) in Kombination mit wenigstens einem weiteren Pestizid umfasst, ferner die entsprechende Verwendung von Kiralaxyl in Kombination mit wenigstens einem weiteren Pestizid und entsprechende Mittel. Spezielles Saatgut wird auch beschrieben.

## Beschreibung

Die vorliegende Erfindung betrifft ein Verfahren zum Schutz vor Phytopathogenen, das die Anwendung von Kiralaxyl (Methyl-*N*-(phenylacetyl)-*N*-(2,6-xylyl)-D-alaninat) in Kombination mit wenigstens einem weiteren Pestizid umfasst, ferner die entsprechende Verwendung von Kiralaxyl in Kombination mit wenigstens einem weiteren Pestizid und entsprechende Mittel.

In der Zeit vor und während der Keimung und Emergenz tendieren Pflanzen dazu, gegenüber Schadorganismen besonders empfindlich zu sein, nicht nur deswegen, weil die geringe Größe der in Entwicklung begriffenen Pflanzenorgane sie außerstande setzt, größere Schädigungen zu überstehen, sondern auch, weil manche der natürlichen Abwehrmechanismen der Pflanzen in dieser Entwicklungsphase noch nicht entwickelt sind. Schutz der Pflanze in der Zeit vor und unmittelbar nach der Keimung ist daher von essentieller Bedeutung bei der Verringerung von Schäden durch Fremdorganismen.

Von besonderer Bedeutung ist, dass Schädigung durch einen Organismus infolge des Durchbrechens natürlicher Barrieren (z.B. der Pflanzenoberfläche) und/oder allgemeine Schädigung der Pflanzen für sekundäre Schädigung durch abiotische Faktoren (z.B. leichteres Abknicken von Pflanzen bei Wind infolge Insektenfraßschadens) ebenso wie für andere Schädlinge (z.B. Erleichterung von Pilzinfektionen im Bereich von Insektenfraßschäden) prädisponieren kann. Hierbei können die sekundären Schäden die primären weit übersteigen.

Als Pestizide werden Substanzen bezeichnet, die einzelne Typen von Schadorganismen mit hoher Spezifität abwehren können; je nach Spezifität unterscheidet man Insektizide, Acarizide, Vermizide/Nematizide, Molluskizide, Fungizide usw., wobei die möglichen Mechanismen Abschreckung, Abtötung, Behinderung der Fortpflanzung u.a. von Schadorganismen umfassen. Eine möglichst hohe Spezifität ist erwünscht, um weder Nutzorganismen noch Verbraucher durch die Pestizidanwendung zu schädigen; es liegt auf der Hand, dass diese Spezifität durch ein entsprechend eng umgrenztes Wirkspektrum erkauft wird und Pestizide daher generell nicht imstande sind, Sekundärschäden durch andere Organismen zu verhindern.

Jedoch hat die herkömmliche Anwendung von Pestiziden auf Pflanzen und ihre Lebensräume, nachfolgend als Feldanwendung bezeichnet, eine Reihe von möglichen Nachteilen: Resistenz gegen ein gegebenes Pestizid entwickelt sich oftmals rasch, namentlich, wenn die Anwendung sehr großflächig erfolgt, so dass immer wieder neue Pestizide entwickelt werden müssen. Die möglichen negativen Wirkungen von Pestiziden auf Umwelt und menschliche Gesundheit haben die Aufmerksamkeit der Öffentlichkeit auf sich gezogen. Insbesondere für Beschäftigte in der Landwirtschaft stellt großzügiger Einsatz von Pestiziden eine ernsthafte Gesundheitsgefährdung dar. Es ist daher ratsam, mit möglichst geringen Dosierungen zu arbeiten. Erfolgreiche Abwehr von Schadorganismen erfordert gute Koordination und hohen Arbeitsaufwand und kann, je nach verwendeter Formulierung, gegenüber abiotischen, schlecht zu kontrollierenden Faktoren wie Wind, Temperatur und Regen sehr empfindlich sein. Es existiert überdies immer die unerwünschte Möglichkeit, dass Pestizide infolge von Diffusion und Konvektion nicht am Einsatzort verbleiben, was den zusätzlichen Nachteil hat, nicht nur Nutzpflanzen, sondern auch Unkräuter zu schützen.

Idealerweise sollte das Pestizid daher in vergleichsweise niedrigen Dosierungen wirksam sein, nicht in größerem Maßstab in die Umgebung und weg von den zu behandelnden Pflanzen diffundieren (was zu unerwünschten "Bystander"-Effekten führen würde), und sich für Verfahren eignen, die sowohl menschliche Exposition als auch den Arbeitsaufwand verringern. Weiterhin sollte es möglich sein, durch ein einheitliches Behandlungsverfahren gleichzeitig Schutz gegen mehrere der wichtigsten Schadorganismen der gleichen oder verschiedener taxonomischer Gruppen zu vermitteln, um auf diese Weise sekundären Schäden vorzubeugen.

Methyl-*N*-(phenylacetyl)-*N*-(2,6-xylyl)-D-alaninat (nach CIP-Nomenklatur: Methyl-*N-*(phenylacetyl)-*N*-(2,6-xylyl)-R-alaninat), auch unter dem Namen Kiralaxyl bekannt, stellt ein hochwirksames Fungizid dar. Beispielsweise beschreibt die WO 98/26654 Mischungen aus Methyl-*N*-(phenylacetyl)-*N*-(2,6-xylyl)-alaninat und mindestens einem anderen Fungizid zur Behandlung von Pilzinfektionen, insbesondere von Oomyzeten-Infektionen (Gattungen *Plasmopara, Phytophthora, Peronospora, Pseudoperonospora* und *Pythium*), an Nutzpflanzen durch Applikation der Mischungen auf gefährdete oder bereits befallene Pflanzen und/oder ihren Lebensraum. Hierbei soll das Methyl-*N-*(phenylacetyl)-*N*-(2,6-xylyl)-alaninat mehr als 50 % des linksdrehenden Enantiomorphs enthalten.

Der vorliegenden Erfindung liegt die Aufgabe zugrunde, neue Verfahren zum Einsatz von Kiralaxyl zu entwickeln, die es erlauben, die Nachteile der Feldanwendung zu vermeiden und dabei zugleich einen kombinierten Schutz gegen Schadorganismen, die entweder zusammen mit Pilzerkrankungen oder in deren Gefolge die Pflanzen in besonderem Maße schädigen können, zu erreichen.

Überraschenderweise wurde gefunden, dass diese Aufgabe gelöst wird, wenn man das Saatgut der zu schützenden Pflanzen mit Kiralaxyl in Kombination mit weiteren Fungiziden und/oder Insektiziden behandelt.

Gegenstand der Erfindung ist daher ein Verfahren zum Schutz einer Pflanze vor einem Phytopathogen, ausgewählt unter den Gattungen *Pythium, Rhizoctonia, Tilletia, Ustilago, Peronospora, Pseudoperonospora, Plasmopara, Alternaria, Cercospora, Drechslera, Fusarium* und *Verticillium,* das dadurch gekennzeichnet ist, dass man Saatgut der Pflanze mit
A) Kiralaxyl der Formel I 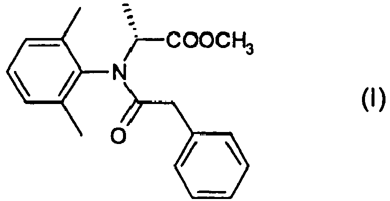 in Kombination mit wenigstens einem weiteren Pestizid, das ausgewählt ist unter
B) weiteren Fungiziden, und
C) Insektiziden,
   behandelt.

Ein weiterer Gegenstand der Erfindung ist die Verwendung von
A) Kiralaxyl der Formel I 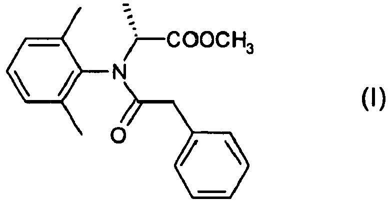 in Kombination mit wenigstens einem weiteren Pestizid, das ausgewählt ist unter
B) weiteren Fungiziden, und
C) Insektiziden,
zur Behandlung von Saatgut zum Schutz einer Pflanze vor einem Phytopathogen, ausgewählt unter den Gattungen *Pythium, Rhizoctonia, Tilletia, Ustilago, Peronospora, Pseudoperonospora, Plasmopara, Alternaria, Cercospora, Drechslera, Fusarium* und *Verticillium.*

Ein weiterer Gegenstand der Erfindung ist ein Mittel zur Behandlung von Saatgut zum Schutz einer Pflanze vor einem Phytopathogen, ausgewählt unter den Gattungen *Pythium, Rhizoctonia, Tilletia, Ustilago, Peronospora, Pseudoperonospora, Plasmopara, Alternaria, Cercospora, Drechslera, Fusarium* und *Verticillium,* wobei das Mittel
A) Kiralaxyl der Formel I 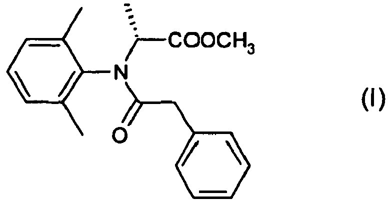 in Kombination mit wenigstens einem weiteren Pestizid, das ausgewählt ist unter
B) weiteren Fungiziden, und
C) Insektiziden,
umfasst.

Ein weiterer Gegenstand der Erfindung ist Saatgut mit einem Gehalt an
A) Kiralaxyl der Formel I 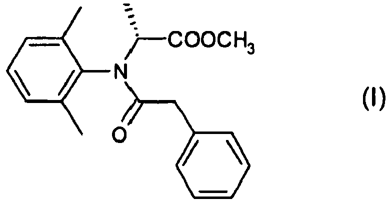 in Kombination mit wenigstens einem weiteren Pestizid, das ausgewählt ist unter
B) weiteren Fungiziden, und
C) Insektiziden.

Ein weiterer Gegenstand der Erfindung ist Saatgut, das mit einem erfindungsgemäßen Verfahren erhältlich ist.

Kiralaxyl (Komponente A) ist ein bekanntes Fungizid aus der Gruppe der Acylalanine und steht für im Wesentlichen enantiomerenreines Methyl-*N*-(phenylacetyl)-*N*-(2,6-xylyl)-D-alaninat der Formel I. Dies schließt nicht aus, dass mit der Kiralaxyl enthaltenden Präparation, beispielsweise einem Verfahrens- oder Handelsprodukt auch geringe Anteile an Methyl-*N*-(phenylacetyl)-*N*-(2,6-xylyl)-L-alaninat anfallen. Allerdings sind solche Anteils erfindungsgemäß verhältnismäßig gering. In diesem Sinn gilt für erfindungsgemäße Verfahren, Verwendungen und Mittel, dass das gewichtsbezogene Verhältnis von Methyl-*N*-(phenylacetyl)-*N*-(2,6-xylyl)-D-alaninat zu Methyl-*N-*(phenylacetyl)-*N*-(2,6-xylyl)-L-alaninat wenigstens 9:1, vorzugsweise wenigstens 19:1 und insbesondere wenigstens 99:1 beträgt.

Verfahren zur Herstellung von Kiralaxyl sind im Prinzip bekannt und beispielsweise in WO 00/76960 beschrieben, worauf hiermit in vollem Umfang Bezug genommen wird. Alternative Verfahren der Synthese von Kiralaxyl sind in WO 98/26654 beschrieben.

Das weitere Fungizid kann im Prinzip jeder Wirkstoff mit fungizider Wirkung sein. Solche finden sich beispielsweise in Standardwerken wie The Pesticide Manual, British Crop Protection Council, 13. Auflage 2003, worauf hiermit in vollem Umfang Bezug genommen wird. Insbesondere ist das weitere Fungizid ausgewählt unter
- Acylalaninen wie Metalaxyl, Ofurace, Oxadixyl;
- Aminderivaten wie Aldimorph, Dodine, Dodemorph, Fenpropimorph, Fenpropidin, Guazatine, Iminoctadine, Spiroxamin, Tridemorph;
- Anilinopyrimidinen wie Pyrimethanil, Mepanipyrim oder Cyprodinyl;
- Antibiotika wie Cycloheximid, Griseofulvin, Kasugamycin, Natamycin, Polyoxin, Streptomycin und Validamycin A;
- Azolen wie Bitertanol, Bromuconazole, Cyazofamid, Cyproconazole, Difenoconazole, Dinitroconazole, Epoxiconazol, Etridazole, Fenbuconazole, Fluquinconazole, Flusilazole, Flutriafol, Fuberidazol, Hexaconazol, Hymexazol, Imazalil, Ipconazole, Imibenconazol, Metconazole, Myclobutanil, Penconazole, Perfuazorate, Propiconazol, Prochloraz, Prothioconazole, Simeconazole, Tebuconazole, Tetraconazole, Thiabendazol, Triadimefon, Triadimenol, Triflumizol, Triticonazol, 2-Butoxy-6-iod-3-propylchromen-4-on, 3-(3-Brom-6-fluor-2-methylindol-1-sulfonyl)-[1,2,4]triazol-1-sulfonsäuredimethylamid;
- 2-Methoxybenzophenonen, wie sie in EP-A 897904 durch die allgemeine Formel I beschrieben werden, z. B. Metrafenon;
- Dicarboximiden wie Iprodion, Myclozolin, Procymidone, Vinclozolin;
- Dithiocarbamaten wie Ferbam, Nabam, Maneb, Mancozeb, Metam, Metiram, Propineb, Polycarbamat, Thiram, Ziram, Zineb;
- Heterocyclischen Verbindungen wie Anilazine, Benomyl, Boscalid, Carbendazim, Carboxin, Oxycarboxin, Cyazofamid, Dazomet, Dithianon, Ethirimol, Dimethirimol, Famoxadon, Fenamidon, Fenarimol, Fuberidazole, Flutolanil, Furametpyr, Isoprothiolane, Mepronil, Nuarimol, Octhilinone, Picobezamid, Probenazole, Proquinazid, Pyrifenox, Pyroquilon, Quinoxyfen, Silthiofam, Thiabendazole, Thifluzamid, Thiophanat-methyl, Tiadinil, Tricyclazole, Triforine, 3-[5-(4-Chlorphenyl)-2,3-dimethyl-isoxazolidin-3-yl]-pyridine, und Bupirimate;
- Nitrophenylderivativen wie Binapacryl, Dinocap, Dinobuton, Nitrophthalisopropyl;
- Phenylpyrrolen wie Fenpiclonil sowie Fludioxonil;
- weiteren unklassifizierten Fungiziden wie Acibenzolar-S-methyl, Benthiavalicarb, Carpropamid, Chlorothalonil, Cyflufenamid, Cymoxanil, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminum, Iprovalicarb, Hexachlorobenzol, Metrafenon, Pencycuron, Propamocarb, Phthalide, Tolclofos-Methyl, Quintozene, Zoxamid, Isoprothiolan, Fluopicolide (Picobenzamid), Carpropamid, Mandipropamid, N-(2-{4-[3-(4-Chlorphenyl)-prop-2-inyloxy]-3-methoxyphenyl}ethyl)-2-methansulfonylamino-3-methyl-butyramid, N-(2-{4-[3-(4-Chlorphenyl)-prop-2-inyloxy]-3-methoxyphenyl}-ethyl)-2-ethansulfonylamino-3-methylbutyramid; Furametpyr, Thifluzamide, Penthiopyrad, Fenhexamid, 3,4-Dichlorisothiazol-5-carbonsäure-(2-cyano-phenyl)-amide, Flubenthiavalicarb, 3-(4-Chlorphenyl)-3-(2-isopropoxycarbonylamino-3-methylbutyrylamino)-propionsäuremethylester, {2-Chlor-5-[1-(6-methylpyridin-2-yl-methoxyimino)-ethyl]-benzyl}-carbaminsäuremethylester, {2-Chlor-5-[1-(3-methylbenzyloxyimino)-ethyl]-benzyl}-carbaminsäuremethylester, Flusulfamide, in WO 03/66610 beschriebenen Amiden der Formeln 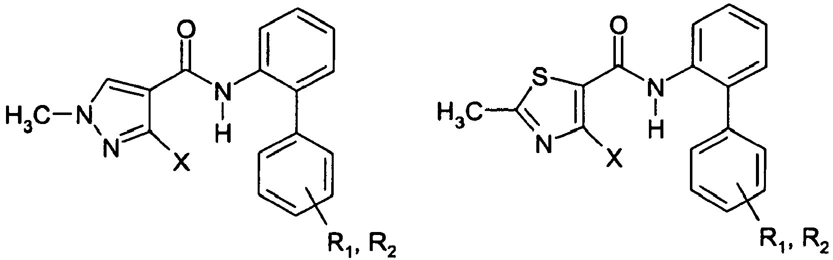 worin
   X für CHF₂, CF₃ oder CH₃; und
   R¹, R² unabhängig voneinander für Halogen, Methyl, Halogenmethyl, z. B. CF₃, Methoxy, Halogenmethoxy, z.B. OCF₃, oder CN stehen, beispielsweise 4-Difluormethyl-2-methyl-thiazol-5-carbonsäure-(4'-brom-biphenyl-2-yl)-amid, 4-Difluormethyl-2-methyl-thiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid; oder 3-Difluormethyl-1-methyl-pyrazol-4-carbonsäure-(3,4'-dichlor-4-fluor-biphenyl-2-yl)-amid;
- Strobilurinen, wie sie in WO 03/075663 durch die allgemeine Formel I beschrieben werden, beispielsweise Azoxystrobin, Dimoxystrobin, Fluoxastrobin, Kresoxim-methyl, Metominostrobin, Orysastrobin, Picoxystrobin, Pyraclostrobin und Trifloxystrobin;
- Sulfensäure-Derivativen wie Captafol, Captan, Dichlofluanid, Folpet, Tolylfluanid;
- Zimtsäureamiden und Analoga wie Dimethomorph, Flumetover, Flumorp;
- 6-Aryl-[1,2,4]triazolo[1,5-a]pyrimidinen wie sie z. B. in WO 98/46608, WO 99/41255 oder WO 03/004465 jeweils durch die allgemeine Formel I beschrieben werden, z. B. 5-Chlor-7-(4-methylpiperidin-1-yl)-6-(2,4,6-trifluorphenyl)-[1,2,4]triazolo[1,5-a]pyrimidin;
- Amidfungiziden wie Cyclofenamid sowie (Z)-N-[α-(Cyclopropylmethoxyimino)-2,3-difluoro-6-(difluoromethoxy)benzyl]-2-phenylacetamid.

Hiervon sind vor allem Fungizide aus den Klassen der Anilinopyrimidine, Azole, Dicarboximide, heterocyclischen Verbindungen, Phenylpyrrole, Strobilurine, 6-Aryl-[1,2,4]triazolo[1,5-a]pyrimidine und Zimtsäureamide bevorzugt.

Das Insektizid kann im Prinzip jeder Wirkstoff mit insektizider Wirkung sein. Solche finden sich beispielsweise in Standardwerken wie The Pesticide Manual, British Crop Protection Council, 13. Auflage 2003, worauf hiermit in vollem Umfang Bezug genommen wird. Insbesondere ist das Insektizid ausgewählt unter
- Organo(thio)phosphaten wie Acephate, Azamethiphos, Azinphos-methyl, Chlorpyrifos, Chlorpyrifos-methyl, Chlorfenvinphos, Diazinon, Dichlorphos, Dimethylvinphos, Dioxabenzofos, Dicrotophos, Dimethoate, Disulfoton, Ethion, EPN, Fenitrothion, Fenthion, Isoxathion, Malathion, Methamidophos, Methidathion, Methyl-Parathion, Mevinphos, Monocrotophos, Oxydemeton-methyl, Paraoxon, Parathion, Phenthoate, Phosalone, Phosmet, Phosphamidon, Phorate, Phoxim, Pirimiphos-methyl, Profenofos, Prothiofos, Primiphos-ethyl, Pyraclofos, Pyridaphenthion, Sulprophos, Triazophos, Trichlorfon; Tetrachlorvinphos, Vamidothion;
- Carbamaten wie Alanycarb, Benfuracarb, Bendiocarb, Carbaryl, Carbofuran, Carbosulfan, Fenoxycarb, Furathiocarb, Indoxacarb, Methiocarb, Methomyl, Oxamyl, Pirimicarb, Propoxur, Thiodicarb, Triazamate;
- Pyrethroiden wie Allethrin, Bifenthrin, Cyfluthrin,Cyphenothrin, Cycloprothrin, Cypermethrin, Deltamethrin, Esfenvalerate, Ethofenprox, Fenpropathrin, Fenvalerate, Cyhalothrin, Lambda-Cyhalothrin, Imoprothrin, Permethrin, Prallethrin, Pyrethrin I, Pyrethrin II, Silafluofen, Tau-Fluvalinate, Tefluthrin, Tralomethrin, Transfluthrin, alpha-Cypermethrin, Zeta-Cypermethrin, Permethrin;
- Arthropoden-Wachstumsregulatoren: a) Chitinsyntheseinhibitoren, z.B. Benzoylharnstoffe wie Chlorfluazuron, Cyromazine, Diflubenzuron, Flucycloxuron, Flufenoxuron, Hexaflumuron, Lufenuron, Novaluron, Teflubenzuron, Triflumuron, Buprofezin, Diofenolan, Hexythiazox, Etoxazole, Clofentazine; b) Ecdysone Antagonisten wie Halofenozide, Methoxyfenozide, Tebufenozide; c) Juvenoide wie Pyriproxyfen, Methoprene, Fenoxycarb; d) Lipid-Biosyntheseinhibitoren wie Spirodiclofen;
- Neonicotinoiden wie Flonicamid, Clothianidin, Dinotefuran, Imidacloprid, Thiamethoxam, Nitenpyram, Nithiazin, Acetamiprid, Thiacloprid;
- weiteren unklassifizierten Insektiziden wie Abamectin, Acequinocyl, Acetamiprid, Amitraz, Azadirachtin, Bensultap, Bifenazate, Cartap, Chlorfenapyr, Chlordimeform, Cyromazine, Diafenthiuron, Dinetofuran, Diofenolan, Emamectin, Endosulfan, Ethiprole, Fenazaquin, Fipronil, Formetanate, Formetanatehydrochlorid, gamma-HCH, Hydramethylnon, Imidacloprid, Indoxacarb, Isoprocarb, Metolcarb, Pyridaben, Pymetrozine, Spinosad, Tebufenpyrad, Thiamethoxam, Thiocyclam, Pyridalyl, Flonicamid, Fluacypyrim, Milbemectin, Spiromesifen, Flupyrazofos, NC 512, Tolfenpyrad, Flubendiamide, Bistrifluron, Benclothiaz, Pyrafluprole, Pyriprole, Amidoflumet, Flufenerim, Cyflumetofen, Acequinocyl, Lepimectin, Profluthrin, Dimefluthrin, Amidrazone, N-R'-2,2-Dihalo-1-R"-cyclopropancarboxamid-2-(2,6-dichlor-α,α,α-tri-fluor-p-tolyl)hydrazon, N-R'-2,2-di(R"')-propionamid-2-(2,6-dichlor-α,α,α-trifluor-p-tolyl)-hydrazon, wobei halo für Chlor oder Brom, R' für Methyl oder Ethyl, R" für Wasserstoff oder Methyl und R"' für Methyl oder Ethyl stehen, XMC und Xylylcarb sowie der Verbindung der folgenden Formel

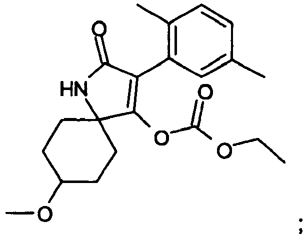

Aminoisothiazolen der Formel 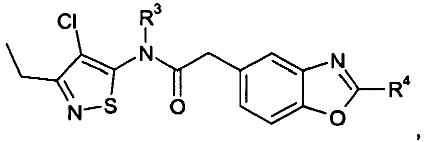 worin
R³ = -CH₂OCH₃ oder H und
R⁴ = -CF₂CF₂ CF₃;
Anthranilamiden der Formel 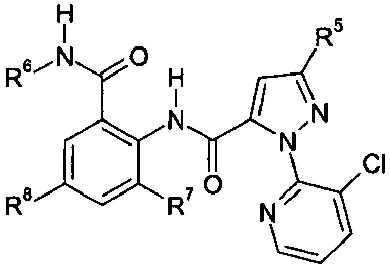 worin R⁵ = Br, CF₃, OC₁-C₄-Alkyl;
R⁶ = C₁-C₄-Alkyl;
R⁷ = Cl, Methyl,
R⁸ = Cl, CN,
beispielsweise Anthranilamiden der Formel 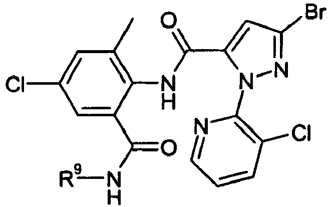 worin R⁹ = C₁-C₄-Alkyl;
sowie der Verbindung der folgenden Formel

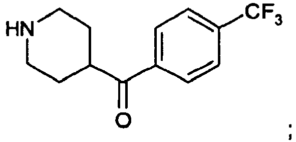

Hiervon sind vor allem Insektizide aus den Klassen der Pyrethroide, Neonicotinoide und unklassifizierten Insektizide bevorzugt.

Bei den Fungiziden der Komponente B und den Insektiziden der Komponente C handelt es sich teilweise um bekannte Pestizide, deren Herstellungsverfahren aus dem Stand der Technik bekannt sind.

So sind Orysastrobin und Herstellungsverfahren dafür beispielsweise in Agrow 399, 26 (2002) beschrieben, auf deren Inhalt hiermit in vollem Umfang Bezug genommen wird.

Triticonazol und Herstellungsverfahren dafür sind beispielsweise in Agrow 166, 24 (1992) beschrieben, auf deren Inhalt hiermit in vollem Umfang Bezug genommen wird.

Boscalid und Herstellungsverfahren dafür sind beispielsweise in Agrow 384, 22 (2001) beschrieben, worauf hiermit in vollem Umfang Bezug genommen wird.

Fluopicolid und Herstellungsverfahren dafür sind beispielsweise in der WO 99/42447 beschrieben, worauf hiermit in vollem Umgang Bezug genommen wird.

In Crop Protection Handbook, Band 89, Meister Publishing, USA 2003, auf dessen Inhalt hiermit in vollem Umfang Bezug genommen wird, sind folgende Fungizide und Herstellungsverfahren dafür beschrieben: Fluoxastrobin (Seite C 238), Prothioconazol (Seite C 394).

5-Chlor-7-(4-methyl-piperidin-1-yl)-6-(2,4,6-trifluor-phenyl)-[1,2,4]triazolo[1,5-a]pyrimidin und Herstellungsverfahren dafür sind beispielsweise in WO 98/46608 beschrieben.

In The Pesticide Manual, 13. Auflage, British Crop Protection Council 2003 sind folgende Fungizide bzw. Insektizide und Herstellungsverfahren dafür beschrieben: Pyraclostrobin, Iprodione, Dimethomorph, Fluquinconazole, Prochloraz, Prothioconazole, Difenoconazole, Tebuconazole, Penconazol, Propiconazol, Azoxystrobin, Triazoxide, Carboxin, Triadimenol, Fipronil, Imadacloprid, Thiamethoxam, Acetamiprid, Clothianidin, alpha-Cypermethrin, Tefluthrin, Spinosad, Thiacloprid, Pyrimethanil, Fludioxonil.

Sofern die weiteren Fungizide der Komponente B) bzw. die Insektizide der Komponente C) geometrische Isomere, z. B. E/Z-Isomere bilden, können sowohl die reinen Isomere als auch deren Gemische erfindungsgemäß eingesetzt werden. Sofern diese Verbindungen ein oder mehrere Chiralitätszentren aufweisen und somit als Enantiomere oder Diastereomere vorliegen können, können sowohl die reinen Enantiomere und die Diastereomere als auch deren Gemische, z.B. racemische Gemische, in den erfindungsgemäßen Mitteln eingesetzt werden.

Sofern Kiralaxyl, die weiteren Fungizide der Komponente B) und die Insektizide der Komponente C) ionisierbare funktionelle Gruppen aufweisen, können sie auch in Form ihrer landwirtschaftlich verträglichen Salze eingesetzt werden. So können sie, wenn sie beispielsweise basische funktionelle Gruppen aufweisen, in Form ihrer Säureadditionssalze zum Einsatz kommen. Im Allgemeinen kommen die Säureadditionssalze derjenigen Säuren in Betracht, deren Anionen die Wirkung der Wirkstoffe nicht negativ beeinträchtigen.

Anionen von brauchbaren Säureadditionssalzen sind in erster Linie Chlorid, Bromid, Fluorid, Iodid, Sulfat, Hydrogensulfat, Methylsulfat, Phosphat, Hydrogenphosphat, Dihydrogenphosphat, Nitrat, Carbonat, Hydrogencarbonat, Hexafluorosilikat, Hexafluorophosphat, Benzoat sowie die Anionen von C₁-C₄-Alkansäuren, vorzugsweise Formiat, Acetat, Propionat und Butyrat.

Folgende Wirkstoffe können beispielsweise in Form von Säureadditionssalzen eingesetzt werden: Pyraclostrobin, Prochloraz, Triticonazol, Tebuconazole und Spinosad.

Einer besonderen Ausführungsform zufolge ist das weitere Pestizid ausgewählt unter Triticonazol, Orysastrobin, Pyraclostrobin, Boscalid, 5-Chlor-7-(4-methyl-piperidin-1-yl)-6-(2,4,6-trifluor-phenyl)-[1,2,4]triazolo[1,5-a]pyrimidin, Iprodione, Pyrimethanil, Dimethomorph, Fluquinconazole, Prochloraz, Metconazole, Prothioconazole, Difenoconazole, Tebuconazole, Penconazol, Propiconazol, Fluoxastrobin, Azoxystrobin, Triazoxide, Carboxin, Fludioxonil, Triadimenol, Fipronil, Imidacloprid, Thiamethoxam, Acetamiprid, Clothianidin, Alpha-Cypermethrin, Tefluthrin, Spinosad und Thiacloprid. Hiervon sind Triticonazole, Orysastrobin, Pyraclostrobin, Boscalid, 5-Chlor-7-(4-methylpiperidin-1-yl)-6-(2,4,6-trifluor-phenyl)-[1,2,4]triazolo[1,5-a]pyrimidin, Iprodione, Pyrimethanil, Fluquinconazole, Prochloraz, Metconazole, Fipronil, Imidacloprid, Thiamethoxam, Acetamiprid, Clothianidin und Alpha-Cypermethrin bevorzugt. Im Rahmen dieser Ausführungsform sind Kombinationen von Kiralaxyl mit 1, 2, 3, 4 oder 5 von diesen weiteren Pestiziden von besonderem Interesse.

Einer besonderen Ausführungsform zufolge ist das weitere Fungizid ausgewählt unter Triticonazol, Orysastrobin, Pyraclostrobin, Boscalid, 5-Chlor-7-(4-methyl-piperidin-1-yl)-6-(2,4,6-trifluor-phenyl)-[1,2,4]triazolo[1,5-a]pyrimidin, Iprodione, Pyrimethanil, Dimethomorph, Fluquinconazole, Prochloraz, Metconazole, Prothioconazole, Difenoconazole, Tebuconazole, Penconazol, Propiconazol, Fluoxastrobin, Azoxystrobin, Triazoxide, Carboxin, Fludioxonil und Triadimenol. Hiervon sind Triticonazole, Orysastrobin, Pyraclostrobin, Boscalid, 5-Chlor-7-(4-methyl-piperidin-1-yl)-6-(2,4,6-trifluor-phenyl)-[1,2,4]triazolo[1,5-a]pyrimidin, Iprodione, Pyrimethanil, Fluquinconazole, Prochloraz und Metconazole bevorzugt. Im Rahmen dieser Ausführungsform sind Kombinationen von Kiralaxyl mit 1, 2 oder 3 von diesen weiteren Fungiziden von besonderem Interesse.

Einer weiteren besonderen Ausführungsform zufolge ist das weitere Fungizid ausgewählt unter Triticonazol, Orysastrobin, Pyraclostrobin, Boscalid, 5-Chlor-7-(4-methylpiperidin-1-yl)-6-(2,4,6-trifluor-phenyl)-[1,2,4]triazolo[1,5-a]pyrimidin, Iprodione, Pyrimethanil, Fluquinconazole, Prochloraz, Metconazole, Prothioconazole, Difenoconazole, Tebuconazole, Penconazol, Fluoxastrobin, Triazoxide, Carboxin und Fludioxonil. Hiervon sind Orysastrobin, Pyraclostrobin, Boscalid, 5-Chlor-7-(4-methyl-piperidin-1-yl)-6-(2,4,6-trifluor-phenyl)-[1,2,4]triazolo[1,5-a]pyrimidin, Fluquinconazole, Prothioconazole, Fluoxastrobin und Carboxin, und ganz besonders Orysastrobin, Pyraclostrobin, Boscalid, 5-Chlor-7-(4-methyl-piperidin-1-yl)-6-(2,4,6-trifluor-phenyl)-[1,2,4]triazolo[1,5-a]pyrimidin und Fluquinconazole bevorzugt. Im Rahmen dieser Ausführungsform sind Kombinationen von Kiralaxyl mit 1, 2 oder 3 von diesen weiteren Fungiziden von besonderem Interesse.

Einer weiteren besonderen Ausführungsform zufolge ist das Insektizid ausgewählt unter Fipronil, Imidacloprid, Thiamethoxam, Acetamiprid, Clothianidin, Alpha-Cypermethrin, Tefluthrin, Spinosad, Thiacloprid. Hiervon sind Fipronil, Imidacloprid, Thiamethoxam, Acetamiprid, Clothianidin und Alpha-Cypermethrin bevorzugt. Im Rahmen dieser Ausführungsform sind Kombinationen von Kiralaxyl mit 1, 2 oder 3 von diesen Insektiziden von besonderem Interesse.

Einer besonderen Ausführungsform zufolge ist mindestens ein Kombinationspartner des Kiralaxyls ausgewählt unter Insektiziden, insbesondere den vorstehend genannten.

Erfindungsgemäß können Kiralaxyl und das zusätzliche Pestizid als binäre, ternäre, quaternäre, quinquienäre oder höhere Kombinationen verwendet werden.

Unter binären Kombinationen werden im Rahmen der vorliegenden Erfindung solche Kombinationen verstanden, in denen als fungizide bzw. insektizide Wirkstoffe neben Kiralaxyl nur ein weiteres Fungizid oder Insektizid verwendet wird. Ternäre Kombinationen sind entsprechend solche Kombinationen, in denen als fungizide bzw. insektizide Wirkstoffe neben Kiralaxyl zwei verschiedene weitere Fungizide, zwei verschiedene Insektizide, oder ein weiteres Fungizid und ein Insektizid verwendet werden. Quaternäre Kombinationen sind entsprechend solche Kombinationen, in denen als fungizide bzw. insektizide Wirkstoffe neben Kiralaxyl drei verschiedene weitere Fungizide, drei verschiedene Insektizide, zwei verschiedene weitere Fungizide und ein Insektizid, oder ein weiteres Fungizid und zwei verschiedene Insektizide verwendet werden. Zu quinquienären Kombinationen gehören entsprechend solche Kombinationen, in denen als fungizide bzw. insektizide Wirkstoffe neben Kiralaxyl drei verschiedene weitere Fungizide und ein Insektizid, zwei verschiedene weitere Fungizide und zwei verschiedene Insektizide, oder ein weiteres Fungizid und drei verschiedene Insektizide verwendet werden.

Erfindungsgemäß werden Kiralaxyl und das oder die weitere oder weiteren, unter weiteren Fungiziden und Insektiziden ausgewählte oder ausgewählten Pestizide (d.h. die Komponente B und/oder die Komponente C) vorzugsweise in einem solchen Gewichtsverhältnis eingesetzt, dass sich Vorteile bei ihrer kombinierten Anwendung, beispielsweise eine synergistische Wirkung, ergeben. In der Regel beträgt das Gewichtsverhältnis von Kiralaxyl zu dem weiteren Pestizid (oder den weiteren Pestiziden) 200:1 bis 1:200, stärker bevorzugt 100:1 bis 1:100, besonders bevorzugt 50:1 bis 1:50 und insbesondere 10:1 bis 1:10. Im Falle von ternären und höheren Kombinationen beträgt das Gewichtsverhältnis der weiteren Pestizide untereinander vorzugsweise 100:1 bis 1:100, besonders bevorzugt 50:1 bis 1:50 und insbesondere 10:1 bis 1:10.

Beispiele für binäre Kombinationen aus Kiralaxyl und einem weiteren Fungizid B sind in Tabelle 1 a aufgeführt.

**Tabelle 1a: Binäre Kombinationen aus Kiralaxyl und einem weiteren Fungizid B**

| Kombination | Weiteres Fungizid B | Gew.-Verhältnis Kiralaxyl: Fungizid B |
|---|---|---|
| 1. | Triticonazole | 100:1 bis 1:100, besonders bevorzugt 50:1 bis 1:50, insbesondere 10:1 bis 1:10 |
| 2. | Orysastrobin | 100:1 bis 1:100, besonders bevorzugt 50:1 bis 1:50, insbesondere 10:1 bis 1:10 |
| 3. | Pyraclostrobin | 100:1 bis 1:100, besonders bevorzugt 50:1 bis 1:50, insbesondere 10:1 bis 1:10 |
| 4. | Boscalid | 100:1 bis 1:100, besonders bevorzugt 50:1 bis 1:50, insbesondere 10:1 bis 1:10 |
| 5. | 5-Chlor-7-(4-methyl-piperidin-1-yl)-6-(2,4,6-trifluor-phenyl)-[1,2,4]triazolo[1,5-a]pyrimidin | 100:1 bis 1:100, besonders bevorzugt 50:1 bis 1:50, insbesondere 10:1 bis 1:10 |
| 6. | Iprodione | 100:1 bis 1:100, besonders bevorzugt 50:1 bis 1:50, insbesondere 10:1 bis 1:10 |
| 7. | Pyrimethanil | 100:1 bis 1:100, besonders bevorzugt 50:1 bis 1:50, insbesondere 10:1 bis 1:10 |
| 8. | Dimethomorph | 100:1 bis 1:100, besonders bevorzugt 50:1 bis 1:50, insbesondere 10:1 bis 1:10 |
| 9. | Fluquinconazole | 100:1 bis 1:100, besonders bevorzugt 50:1 bis 1:50, insbesondere 10:1 bis 1:10 |
| 10. | Prochloraz | 100:1 bis 1:100, besonders bevorzugt 50:1 bis 1:50, insbesondere 10:1 bis 1:10 |
| 11. | Metconazole | 100:1 bis 1:100, besonders bevorzugt 50:1 bis 1:50, insbesondere 10:1 bis 1:10 |
| 12. | Prothioconazole | 100:1 bis 1:100, besonders bevorzugt 50:1 bis 1:50, insbesondere 10:1 bis 1:10 |
| 13. | Difenoconazole | 100:1 bis 1:100, besonders bevorzugt 50:1 bis 1:50, insbesondere 10:1 bis 1:10 |
| 14. | Tebuconazole | 100:1 bis 1:100, besonders bevorzugt 50:1 bis 1:50, insbesondere 10:1 bis 1:10 |
| 15. | Penconazol | 100:1 bis 1:100, besonders bevorzugt 50:1 bis 1:50, insbesondere 10:1 bis 1:10 |
| 16. | Propiconazol | 100:1 bis 1:100, besonders bevorzugt 50:1 bis 1:50, insbesondere 10:1 bis 1:10 |
| 17. | Fluoxastrobin | 100:1 bis 1:100, besonders bevorzugt 50:1 bis 1:50, insbesondere 10:1 bis 1:10 |
| 18. | Azoxystrobin | 100:1 bis 1:100, besonders bevorzugt 50:1 bis 1:50, insbesondere 10:1 bis 1:10 |
| 19. | Triazoxide | 100:1 bis 1:100, besonders bevorzugt 50:1 bis 1:50, insbesondere 10:1 bis 1:10 |
| 20. | Carboxin | 100: 1 bis 1:100, besonders bevorzugt 50:1 bis 1:50, insbesondere 10:1 bis 1:10 |
| 21. | Fludioxonil | 100:1 bis 1:100, besonders bevorzugt 50:1 bis 1:50, insbesondere 10:1 bis 1:10 |
| 22. | Triadimenol | 100:1 bis 1:100, besonders bevorzugt 50:1 bis 1:50, insbesondere 10:1 bis 1:10 |

Beispiele für binäre Kombinationen aus Kiralaxyl und einem weiteren Insektizid C sind in Tabelle 1b aufgeführt.

**Tabelle 1b: Binäre Kombinationen aus Kiralaxyl und einem Insektizid C**

| Kombination | Insektizid C | Gew.-Verhältnis Kiralaxyl: Insektizid C |
|---|---|---|
| 23. | Fipronil | 100:1 bis 1:100, besonders bevorzugt 50:1 bis 1:50, insbesondere 10:1 bis 1:10 |
| 24. | Imidacloprid | 100:1 bis 1:100, besonders bevorzugt 50:1 bis 1:50, insbesondere 10:1 bis 1:10 |
| 25. | Thiamethoxam | 100:1 bis 1:100, besonders bevorzugt 50:1 bis 1:50, insbesondere 10:1 bis 1:10 |
| 26. | Acetamiprid | 100:1 bis 1:100, besonders bevorzugt 50:1 bis 1:50, insbesondere 10:1 bis 1:10 |
| 27. | Clothianidin | 100:1 bis 1:100, besonders bevorzugt 50:1 bis 1:50, insbesondere 10:1 bis 1:10 |
| 28. | Alpha-Cypermethrin | 100:1 bis 1:100, besonders bevorzugt 50:1 bis 1:50, insbesondere 10:1 bis 1:10 |
| 29. | Tefluthrin | 100:1 bis 1:100, besonders bevorzugt 50:1 bis 1:50, insbesondere 10:1 bis 1:10 |
| 30. | Spinosad | 100:1 bis 1:100, besonders bevorzugt 50:1 bis 1:50, insbesondere 10:1 bis 1:10 |
| 31. | Thiacloprid | 100:1 bis 1:100, besonders bevorzugt 50:1 bis 1:50, insbesondere 10:1 bis 1:10 |

Beispiele für ternäre Kombinationen aus Kiralaxyl und zwei weiteren Fungiziden B1 und B2, sind in Tabelle 2a aufgeführt.

**Tabelle 2a: Ternäre Kombinationen aus Kiralaxyl und zwei weiteren Fungiziden B1 und B2**

| Kombination | Weiteres Fungizid B1 | Weiteres Fungizid B2 | Gew.-Verhältnis Kiralaxyl : (Fungizid B1 + B2) |
|---|---|---|---|
| 32. | Triticonazole | Pyraclostrobin | 100:1 bis 1:100, besonders bevor-zugt 50:1 bis 1:50, insbesondere 10:1 bis 1:10 |
| 33. | Triticonazole | 5-Chlor-7-(4-methyl-piperidin-1-yl)-6-(2,4,6-trifluor-phenyl)-[1,2,4]triazolo[1,5-a]pyrimidin | 100:1 bis 1:100, besonders bevorzugt 50:1 bis 1:50, insbesondere 10:1 bis 1:10 |
| 34. | Triticonazole | Prochloraz | 100:1 bis 1:100, besonders bevorzugt 50:1 bis 1:50, insbesondere 10:1 bis 1:10 |
| 35. | Pyraclostrobin | Boscalid | 100:1 bis 1:100, besonders bevorzugt 50:1 bis 1:50, insbesondere 10:1 bis 1:10 |
| 36. | Pyraclostrobin | Dimethomorph | 100:1 bis 1:100, besonders bevorzugt 50:1 bis 1:50, insbesondere 10:1 bis 1:10 |
| 37. | Pyraclostrobin | Thiophanate-methyl | 100:1 bis 1:100, besonders bevorzugt 50:1 bis 1:50, insbesondere 10:1 bis 1:10 |
| 38. | Boscalid | Metconazole | 100:1 bis 1:100, besonders bevorzugt 50:1 bis 1:50, insbesondere 10:1 bis 1:10 |
| 39. | Boscalid | 5-Chlor-7-(4-methyl-piperidin-1-yl)-6-(2,4,6-trifluor-phenyl)-[1,2,4]triazolo[1,5-a]pyrimidin | 100:1 bis 1:100, besonders bevorzugt 50:1 bis 1:50, insbesondere 10:1 bis 1:10 |
| 40. | Boscalid | Orysastrobin | 100:1 bis 1:100, besonders bevorzugt 50:1 bis 1:50, insbesondere 10:1 bis 1:10 |
| 41. | Fluquinconazole | Prochloraz | 100:1 bis 1:100, besonders bevorzugt 50:1 bis 1:50, insbesondere 10:1 bis 1:10 |

Beispiele für ternäre Kombinationen aus Kiralaxyl und zwei Insektiziden C1 und C2 sind in Tabelle 2b aufgeführt.

**Tabelle 2b: Ternäre Kombinationen aus Kiralaxyl und zwei Insektiziden C1 und C2**

| Kombination | Insektizid C1 | Insektizid C2 | Gew.-Verhältnis Kiralaxyl : (Insektizid C1 + C2) |
|---|---|---|---|
| 42. | Fipronil | Alpha-Cypermethrin | 100:1 bis 1:100, besonders bevorzugt 50:1 bis 1:50, insbesondere 10:1 bis 1:10 |
| 43. | Fipronil | Imidacloprid | 100:1 bis 1:100, besonders bevorzugt 50:1 bis 1:50, insbesondere 10:1 bis 1:10 |
| 44. | Fipronil | Thiamethoxam | 100:1 bis 1:100, besonders bevorzugt 50:1 bis 1:50, insbesondere 10:1 bis 1:10 |
| 45. | Fipronil | Acetamiprid | 100:1 bis 1:100, besonders bevorzugt 50:1 bis 1:50, insbesondere 10:1 bis 1:10 |
| 46. | Alpha-Cypermethrin | Acetamiprid | 100:1 bis 1:100, besonders bevorzugt 50:1 bis 1:50, insbesondere 10:1 bis 1:10 |

Beispiele für bevorzugte ternäre Kombinationen aus Kiralaxyl, einem weiteren Fungizid B und einem Insektizid C ergeben sich aus einer Zusammenschau der Tabellen 1a und 1b. Dies sind ternäre Kombinationen, in denen jedes weitere Fungizid B aus den in Tabelle 1a offenbarten Kombinationen 1 bis 22 mit jedem Insektizid aus den in Tabelle 1b offenbarten Kombinationen 23 bis 32 kombiniert ist.

Beispiele für bevorzugte quaternäre Kombinationen aus Kiralaxyl und drei weiteren Fungiziden B1, B2 und B3 sind in Tabelle 3 aufgeführt.

**Tabelle 3: Quaternäre Kombinationen aus Kiralaxyl und drei weiteren Fungiziden B1, B2 und B3**

| Kombination | Fungizid B1 | Fungizid B2 | Fungizid B3 | Gew.-Verhältnis Kiralaxyl : (Fungizid B1 + B2 + B3) |
|---|---|---|---|---|
| 47. | Pyraclostrobin | Boscalid | Dimetho-morph | 100:1 bis 1:100, besonders bevorzugt 50:1 bis 1:50, insbesondere 10:1 bis 1:10 |

Beispiele für bevorzugte quaternäre Kombinationen aus Kiralaxyl, zwei weiteren Fungizid B1 und B2 sowie einem Insektizide C ergeben sich aus einer Zusammenschau der Tabellen 2a und 1 b. Dies sind quaternäre Kombinationen, in denen jede Kombination der weiteren Fungiziden B1 und B2 aus den in Tabelle 2a offenbarten Kombinationen 32 bis 41 mit jedem Insektizid aus den in Tabelle 1 b offenbarten Kombinationen 23 bis 31 kombiniert ist.

Beispiele für bevorzugte quaternäre Kombinationen aus Kiralaxyl, einem weiteren Fungizid B sowie zwei Insektiziden C1 und C2 ergeben sich aus einer Zusammenschau der Tabellen 1a und 2b. Dies sind quaternäre Kombinationen, in denen jedes weitere Fungizid B aus den in Tabelle 1 a offenbarten Kombinationen 1 bis 22 mit jeder Kombination der Insektizide C1 und C2 aus den in Tabelle 2b offenbarten Kombinationen 42 bis 46 kombiniert ist.

Beispiele für bevorzugte quinquienäre Kombinationen aus Kiralaxyl, drei weiteren Fungiziden B1, B2 und B3 sowie einem Insektizid C ergeben sich aus einer Zusammenschau der Tabellen 3 und 1 b. Dies sind quaternäre Kombinationen, in denen die Kombination der weiteren Fungizide B1, B2 und B3 aus der in Tabelle 3 offenbarten Kombination 47 mit jedem Insektizid C aus den in Tabelle 1 b offenbarten Kombinationen 23 bis 31 kombiniert ist.

Beispiele für bevorzugte quinquienäre Kombinationen aus Kiralaxyl, zwei weiteren Fungiziden B1 und B2 sowie zwei Insektiziden C1 und C2 ergeben sich aus einer Zusammenschau der Tabellen 2a und 2b. Dies sind quaternäre Kombinationen, in denen die Kombinationen der weiteren Fungizide B1 und B2 aus der in Tabelle 2a offenbarten Kombinationen 32 bis 41 mit jeder Kombination der weiteren Insektizide C1 und C2 aus den in Tabelle 2b offenbarten Kombinationen 42 bis 46 kombiniert ist.

Höhere Kombinationen aus Kiralaxyl und mehr als vier weiteren zusätzlichen Pestiziden ergeben sich aus der Zusammenschau der oben genannten Tabellen.

Der Begriff "Saatgut" meint wenigstens einen Samen und bezieht sich auf ein vom vegetativen Stadium einer Pflanze physisch getrenntes Ruhestadium. Saatgut kann für einen längeren Zeitraum aufbewahrt und/oder verwendet werden, um ein weiteres Pflanzenindividuum derselben Spezies, von dem das Saatgut abstammt, heranzuziehen. Der Begriff "Ruhestadium" bedeutet, dass die Lebensfähigkeit trotz der Abwesenheit von Licht, Wasser und/oder Nährstoffen, die für das vegetative Stadium, d.h. dem Nicht-Saatgutstadium, essentiell sind, erhalten bleibt.

Erfindungsgemäß umfasst die Saatgutbehandlung das Einwirkenlassen der Wirkstoffe auf wenigstens einen Samen. Wenngleich das vorliegende Verfahren auf einen Samen in jedem beliebigen physiologischen Zustand Anwendung finden kann, ist es bevorzugt, dass sich der Samen in einem so beständigen Zustand befindet, dass er während der Behandlung keinen Schaden nimmt. Typischerweise ist der Samen ein Samen, der mit der Ernte anfällt; der Pflanze entnommen ist; oder von der Frucht oder anderen beliebigen Samen tragenden Pflanzenteilen abgetrennt ist. Vorzugsweise ist der Samen auch biologisch so stabil, dass die Behandlung dem Samen keinen biologischen Schaden zufügt. Einer Ausführungsform zufolge kann die Behandlung auf einen Samen angewendet werden, der geerntet, gereinigt und auf einen Feuchtigkeitsgehalt von unter etwa 15 Gew.-% getrocknet wurde. Einer weiteren Ausführungsform zufolge kann der zu behandelnde Samen einer sein, der zunächst getrocknet und dann mit Wasser und/oder einem anderen Material geprimt und dann erneut, vor oder während der Behandlung mit der erfindungsgemäßen Wirkstoffkombination, getrocknet wurde. Prinzipiell kann die Behandlung auf einen Samen zu einem beliebigen Zeitpunkt zwischen der Gewinnung, also insbesondere der Ernte, und dem Aussäen des Samens angewendet werden.

Zweckmäßigerweise wird die Behandlung einem ungesäten Samen zuteil. Der Begriff "ungesäter Samen" bezieht sich auf einen Samen zu einem beliebigen Zeitpunkt zwischen der Gewinnung und dem Aussäen des Samens in den Boden, letzteres zu Zwecken der Keimung und des Wachstums der Pflanze.

Mit der Behandlung eines ungesäten Samens sind diejenigen Vorgehensweisen, bei denen die Wirkstoffkombination eher auf den Boden als direkt auf den Samen aufgebracht wird, nicht gemeint. Indem man die Behandlung dem Samen vor dem Aussäen des Samens zuteilwerden lässt, vereinfacht sich das Verfahren. Auf diese Art und Weise kann Saatgut beispielsweise an einem zentralen Ort behandelt und dann verteilt werden. Dies gestattet es, beim Pflanzen des Samens den Umgang mit der Wirkstoffkombination vermeiden zu können. Es wird lediglich der behandelte Samen in einer für unbehandelte Samen herkömmlichen Art und Weise gepflanzt.

Zur Behandlung des Saatguts können grundsätzlich alle üblichen Methoden der Saatgutbehandlung bzw. Saatgutbeize eingesetzt werden. Im einzelnen geht man bei der Behandlung so vor, dass man das Saatgut mit der jeweils gewünschten Menge an Wirkstoffkombination, in der Regel in Form einer oder mehrerer Formulierung(en), entweder als solche oder nach vorherigem Verdünnen mit Wasser in einer hierfür geeigneten Vorrichtung, beispielsweise einer Mischvorrichtung für feste oder fest/flüssige Mischungspartner bis zur gleichmäßigen Verteilung der Wirkstoffkombination mit dem Saatgut mischt. Dieser Vorgang kann ein Beschichten oder Tränken des Saatguts mit zumindest einem Teil der Wirkstoffkombination beinhalten. Während sich beim Beschichten eine wirkstoffhaltige Schicht auf der Oberfläche der Samen ausbildet, dringt beim Tränken zumindest ein Teil der Wirkstoffkombination in das Innere der Samen ein. Gegebenenfalls schließt sich ein Trocknungsvorgang an. Beide Vorgehensweisen sind dem Fachmann geläufig.

Die Komponenten A und B bzw. C können gemeinsam oder getrennt appliziert werden. Bei der getrennten Anwendung kann die Applikation der einzelnen Wirksubstanzen gleichzeitig oder - innerhalb einer Behandlungsfolge - gestaffelt nacheinander erfolgen, wobei sie bei der sukzessiven Applikation vorzugsweise in einem zeitlichen Abstand von wenigen Minuten bis mehreren Tagen erfolgt.

Es werden im Allgemeinen Wirkstoffmengen (Gesamtwirkstoffmengen) von 1 bis 1000 g/100 kg Saatgut, vorzugsweise 1 bis 200 g/100 kg Saatgut, insbesondere 5 bis 100 g/100 kg Saatgut verwendet.

In einer besonderen Ausführung der Erfindung schützt die Behandlung nicht nur das Saatgut während der Lagerung und Aussaat und bis zum Auskeimen, sondern auch die Pflanzen während des Auskeimens und danach, bevorzugt über die Emergenzphase hinaus, besonders bevorzugt für mindestens sechs Wochen nach der Aussaat und nochmals besonders bevorzugt für mindestens vier Wochen nach der Aussaat.

Erfindungsgemäß schützt die Saatgutbehandlung vor den oben genannten Phytopathogenen, insbesondere Schadpilzen.

Unter "Schutz" wird jede Maßnahme oder Kombination von Maßnahmen verstanden, die geeignet ist, Schädigungen durch Fremdorganismen zu verringern oder gänzlich zu verhindern. Eine "Schädigung" umfasst hierbei jede Art von qualitativer und/oder quantitativer Ertragsminderung (Verringerung des Anteils auskeimender Pflanzen, der Erntemenge, der Fruchtqualität usw.). Schutz gilt dann als erreicht, wenn die Schädigung des behandelten Saatgutes und/oder der daraus erwachsenden Pflanzen gegenüber der des unbehandelten Saatgutes bzw. der daraus erwachsenden Pflanzen signifikant reduziert ist.

Insbesondere eignet sich die Saatgutbehandlung zum Schutz der folgenden Wirtspflanzen vor folgenden pflanzenpathogenen Pilzen:
- Gemüse, Raps, Zuckerrüben, Obst oder Reis, falls das Phytopathogen eine *Alternaria-*Art ist;
- Mais oder Getreide, falls das Phytopathogen eine *Drechslera-*Art ist,
- Mais, Sojabohnen, Reis oder Zuckerrüben, falls das Phytopathogen eine *Cercospora-*Art ist,
- verschiedene Wirtspflanzen, insbesondere Gräser, Hülsenfrüchte, Pfeffer, Raps, Gurken, Bananen oder Solanaceen wie Tomaten, Kartoffeln oder Auberginen, falls das Phytopathogen eine *Fusarium-*Art ist,
- verschiedene Wirtspflanzen, insbesondere Gräser, Hülsenfrüchte, Pfeffer oder Solanaceen wie Tomaten, Kartoffeln oder Auberginen, falls das Phytopathogen eine *Verticillium-*Art ist,
- Sojabohnen, Gemüse oder Sorghum, falls das Phytopathogen eine *Peronospora-*oder *Pseudoperonospora-*Art,
- Sonnenblumen, falls das Phytopathogen eine *Plasmopara-*Art ist,
- Rasengräser, Reis, Mais, Baumwolle, Raps, Sonnenblumen, Zuckerrüben oder Gemüse, falls das Phytopathogen eine *Pythium-*Art ist,
- Baumwolle, Reis, Kartoffeln, Rasengräser, Mais, Raps, Kartoffeln, Zuckerrüben oder Gemüse, falls das Phytopathogen eine *Rhizoctonia-*Art ist,
- Getreide, falls das Phytopathogen eine *Tilletia-*Art ist, oder
- Getreide, Mais oder Zuckerrüben, falls das Phytopathogen eine *Ustilago-*Art ist.

Die erfindungsgemäßen Kombinationen, in welchen Kiralaxyl zusammen mit dem oder den weiteren Fungiziden bzw. Insektiziden verwendet wird, können überraschenderweise eine bessere fungizide Wirksamkeit gegenüber Schadpilzen aufweisen als nach der fungiziden Wirksamkeit der einzelnen Verbindungen zu erwarten gewesen wären, d. h. die fungizide Wirksamkeit wird in überadditivem Maße erhöht. Das bedeutet, dass durch die gemeinsame Anwendung von Kiralaxyl mit wenigstens einem weiteren Fungizid eine Wirkungssteigerung gegenüber Schadpilzen im Sinne eines Synergieeffekts (Synergismus) erzielt wird. Aus diesem Grund können die Kombinationen in geringeren Gesamtaufwandmengen eingesetzt werden. Wird Kiralaxyl mit einem Insektizid kombiniert, ergibt sich neben der fungiziden auch noch eine insektizide Wirkung.

In einer besonderen Ausführung der Erfindung werden daher Dosierungen verwendet, in denen nicht jede Pestizidkomponente für sich allein bereits eine Schutzwirkung gegen den jeweiligen Organismus erzielt, die Kombination hingegen dies erreicht (Synergismus). Bei Kombinationen mit mehr als zwei Partnern kann der Synergismus alle Kombinationspartner oder nur einige von ihnen umfassen, auch können mehrere untereinander synergistisch wirksame Partner in einer Kombination zusammengefasst werden. Somit können ternäre Kombinationen zwei oder drei; quaternäre zwei, drei, vier oder zweimal zwei; quinquienäre zwei, drei, vier, fünf, zweimal zwei oder zwei und drei miteinander synergistisch wirksame Partner umfassen. Eine Gruppe von Partnern ist synergistisch, wenn mindestens einer von ihnen in einer Dosis vorliegt, in der er für sich allein keine Schutzwirkung erzielen kann, in der Anwesenheit des Partners oder der Partner dies jedoch tut, unabhängig davon, ob der Partner oder die Partner alleine Schutzwirkung erzielen kann/können oder nicht.

In einer weiteren besonderen Ausführung der Erfindung werden Dosierungen eingesetzt, bei denen jede Komponente für sich allein bereits eine Schutzwirkung gegen den jeweiligen Organismus erzielt, die Wirkspektren der einzelnen Komponenten sich jedoch unterscheiden. Besonders bevorzugt ist es hierbei, wenn die Wirkungen der einzelnen Komponenten komplementär sind, indem sie unabhängig voneinander auf häufig vergesellschaftete Schadorganismen wirken.

Zu den erfindungsgemäßen Mitteln gehören sowohl Zusammensetzungen, die Kiralaxyl der Formel I und wenigstens ein weiteres Fungizid und/oder ein Insektizid umfassen, als auch Kits, die eine erste Komponente, welche Kiralaxyl der Formel I enthält, und wenigstens eine weitere Komponente, welche wenigstens ein weiteres Fungizid und/oder ein Insektizid enthält, umfassen, wobei die erste und die weitere Komponente in der Regel in Form von getrennten Formulierungen vorliegen. Die Anwendung dieser Formulierungen kann gleichzeitig oder zu verschiedenen Zeitpunkten erfolgen, wie bereits für die erfindungsgemäßen Verfahren dargelegt.

Entsprechendes gilt auch für die Gewichtsverhältnisse erfindungsgemäßer Kits, wobei besagte Gewichtsverhältnisse auch in Form einer Gebrauchsanweisung zur kombinierten Anwendung bestimmter Mengen der Komponenten A) und B) bzw. C) zum Ausdruck gebracht sein können.

Je nachdem, in welcher Ausgestaltung die anwendungsfertigen Formulierungen der erfindungsgemäßen Mittel vorliegen, enthalten sie einen oder mehrere flüssige oder feste Träger, gegebenenfalls oberflächenaktive Substanzen und gegebenenfalls weitere, für die Formulierung von Fungiziden bzw. Insektiziden übliche Hilfsstoffe. Die Rezepturen für solche Formulierungen sind dem Fachmann hinreichend bekannt.

Wässrige Anwendungsformen können z. B. aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen können die Fungizide bzw. Insektizide als solche oder in einem Öl oder Lösungsmittel gelöst und mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Die Formulierungen werden in bekannter Weise hergestellt, z. B. durch Verstrecken der Fungizide bzw. Insektizide mit Lösungsmitteln und/oder Trägerstoffen, gewünschtenfalls unter Verwendung von oberflächenaktiven Substanzen, d. h. Emulgiermitteln und Dispergiermitteln. Als Lösungsmittel / Trägerstoffe kommen dafür im wesentlichen in Betracht:
- Wasser, aromatische Lösungsmittel (z. B. Solvesso-Produkte, Xylol), Paraffine (z. B. Erdölfraktionen), Alkohole (z. B. Methanol, Butanol, Pentanol, Benzylalkohol), Ketone (z. B. Cyclohexanon, Methylhydroxybutylketon, Diacetonalkohol, Mesityloxid, Isophoron), Lactone (z. B. gamma-Butryolacton), Pyrrolidone (Pyrrolidon, N-methylpyrrolidon, N-Ethylpyrrolidon, n-Octylpyrrolidon), Acetate (Glykoldiacetat), Glykole, Dimethylfettsäureamide, Fettsäuren und Fettsäureester. Grundsätzlich können auch Lösungsmittelgemische verwendet werden.
- Trägerstoffe wie natürliche Gesteinsmehle (z. B. Kaoline, Tonerden, Talkum, Kreide) und synthetische Gesteinsmehle (z. B. hochdisperse Kieselsäure, Silikate), Emulgiermittel wie nichtionogene und anionische Emulgatoren (z. B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen Alkali-, Erdalkali- und Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Mesityloxid, Isophoron, stark polare Lösungsmittel, z. B. Dimethylsulfoxid, 2-Pyrrolidon, N-Methylpyrrolidon, Butyrolacton oder Wasser in Betracht.

Pulver-, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an feste Trägerstoffe hergestellt werden. Feste Trägerstoffe sind z. B. Mineralerden, wie Kieselgele, Silikate, Talkum, Kaolin, Attaclay, Kalkstein, Kalk, Kreide, Bolus, Löß, Ton, Dolomit, Diatomeenerde (Kieselgur), Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im Allgemeinen zwischen 0,01 und 95 Gew.-%, vorzugsweise zwischen 0,1 und 90 Gew.-%, insbesondere 5 bis 50 Gew.-% der fungiziden bzw. insektiziden Wirkstoffe. Die Wirkstoffe werden dabei in einer Reinheit von 90 % bis 100 %, vorzugsweise 95 % bis 100 % (nach NMR-Spektrum) eingesetzt.

Beispiele für Formulierungen sind:
1. Produkte zur Verdünnung in Wasser
   I) Wasserlösliche Konzentrate (SL) 10 Gew.-% Wirkstoffe werden in Wasser oder einem wasserlöslichen Lösungsmittel gelöst. Alternativ werden Netzmittel oder andere Hilfsmittel zugefügt. Bei der Verdünnung in Wasser löst sich der Wirkstoff.
   II) Dispergierbare Konzentrate (DC) 20 Gew.-% Wirkstoffe werden in Cyclohexanon unter Zusatz eines Dispergiermittels, z. B. Polyvinylpyrrolidon, gelöst. Bei Verdünnung in Wasser ergibt sich eine Dispersion.
   III) Emulgierbare Konzentrate (EC) 15 Gew.-% Wirkstoffe werden in Xylol unter Zusatz von Ca-Dodecylbenzolsulfonat und Rizinusölethoxylat (jeweils 5 %) gelöst. Bei der Verdünnung in Wasser ergibt sich eine Emulsion.
   IV) Emulsionen (EW, EO) 40 Gew.-% Wirkstoffe werden in Xylol unter Zusatz von Ca-Dodecylbenzolsulfonat und Rizinusölethoxylat (jeweils 5 %) gelöst. Diese Mischung wird mittels einer Emulgiermaschine (Ultraturrax) in Wasser eingebracht und zu einer homogenen Emulsion gebracht. Bei der Verdünnung in Wasser ergibt sich eine Emulsion.
   V) Suspensionen (SC, OD) 20 Gew.-% Wirkstoffe werden unter Zusatz von Dispergier- und Netzmitteln und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.
   VI) Wasserdispergierbare und wasserlösliche Granulate (WG, SG) 50 Gew.-% Wirkstoff werden unter Zusatz von Dispergier- und Netzmitteln fein gemahlen und mittels technischer Geräte (z. B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.
   VII) Wasserdispergierbare und wasserlösliche Pulver (WP, SP) 75 Gew.-% Wirkstoffe werden unter Zusatz von Dispergier- und Netzmitteln sowie Kieselsäuregel in einer Rotor-Stator-Mühle vermahlen. Bei der Verdünnung in Wasser ergibt sich eine stabile Dispersion oder Lösung des Wirkstoffs.
2. Produkte für die Direktapplikation
   VIII) Stäube (DP) 5 Gew.-% Wirkstoffe werden fein gemahlen und mit 95 Gew.-% feinteiligem Kaolin innig vermischt. Man erhält dadurch ein Stäubemittel.
   IX) Granulate (GR, FG, GG, MG) 0,5 Gew.-% Wirkstoffe werden fein gemahlen und mit 99,5 Gew.-% Trägerstoffen verbunden. Gängige Verfahren sind dabei die Extrusion, die Sprühtrocknung oder die Wirbelschicht. Man erhält dadurch ein Granulat für die Direktapplikation.
   X) ULV-Lösungen (UL) 10 Gew.-% Wirkstoffe werden in einem organischen Lösungsmittel, z. B. Xylol gelöst. Dadurch erhält man ein Produkt für die Direktapplikation.

Besonders bevorzugte Formulierungen für die Behandlung von Saatgut sind:
I Lösliche Konzentrate (SL)
IV Emulsionen (EW, EO)
V Suspensionen (SC, OD)
VI Wasserdispergierbare und wasserlösliche Granulate (WG, SG)
VII Wasserdispergierbare und wasserlösliche Pulver (WP, SP)
VIII Stäube und staubartige Pulver (DP)

Bevorzugte Feststoffformulierungen der Fungizide bzw. Insektizide zur Saatgutbehandlung umfassen üblicherweise 0,5 bis 80 % Wirkstoffe, 0,05 bis 5 % Netzmittel, 0,5 bis 15 % Dispergiermittel, 0,1 bis 5 % Verdicker, 5 bis 20 % Frostschutzmittel, 0,1 bis 2 % Entschäumer, 1 bis 20 % Pigment und/oder Farbstoff, 0 bis 15 % Klebe- bzw. Haftmittel, 0 bis 75 % Füllstoff/Vehikel, und 0,01 bis 1 % Konservierungsmittel.

Geeignete Pigmente bzw. Farbstoffe für Formulierungen der Fungizide bzw. Insektizide zur Saatgutbehandlung sind Pigment blue 15:4, Pigment blue 15:3, Pigment blue 15:2, Pigment blue 15:1, Pigment blue 80, Pigment yellow 1, Pigment yellow 13, Pigment red 112, Pigment red 48:2, Pigment red 48:1, Pigment red 57:1, Pigment red 53:1, Pigment orange 43, Pigment orange 34, Pigment orange 5, Pigment green 36, Pigment green 7, Pigment white 6, Pigment brown 25, Basic violet 10, Basic violet 49, Acid red 51, Acid red 52, Acid red 14, Acid blue 9, Acid yellow 23, Basic red 10, Basic red 108.

Als Netzmittel und Dispergiermittel kommen insbesondere die genannten oberflächenaktiven Substanzen in Betracht. Bevorzugte Netzmittel sind Alkylnaphthalin-Sulfonate, wie Diisopropyl- oder Diisobutylnaphthalin-Sulfonate. Bevorzugte Dispergiermittel sind nichtionische oder anionische Dispergiermittel oder Gemische von nichtionischen oder anionischen Dispergiermitteln. Geeignete nichtionische Dispergiermittel sind insbesondere Ethylenoxid-Propylenoxid-Blockpolymere, Alkylphenolpolyglykolether sowie Tristryrylphenolpolyglykolether, beispielsweise Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester und Methylcellulose. Geeignete anionische Dispergiermittel sind insbesondere Alkali-, Erdalkali- und Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Arylsulfonat-Formaldehydkondensate, z. B. Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Ligninsulfonate, Ligninsulfitablaugen, phosphatierte oder sulfatierte Derivate der Methylcellulose und Polyacrylsäuresalze.

Als Frostschutzmittel können grundsätzlich alle Substanzen eingesetzt werden, die den Schmelzpunkt von Wasser erniedrigen. Zu den geeigneten Frostschutzmitteln zählen Alkanole wie Methanol, Ethanol, Isopropanol, die Butanole, Glykol, Glycerin, Diethylenglykol und dergleichen.

Als Verdickungsmittel kommen alle für derartige Zwecke in agrochemischen Mitteln einsetzbaren Stoffe in Frage, beispielsweise Cellulosederivate, Polyacrylsäurederivate, Xanthan, modifizierte Tone und hochdisperse Kieselsäure.

Als Entschäumer können alle zur Formulierung von agrochemischen Wirkstoffen üblichen schaumhemmenden Stoffe eingesetzt werden. Besonders geeignet sind Silikonentschäumer und Magnesiumstearat.

Als Konservierungsmittel können alle für derartige Zwecke in agrochemischen Mitteln einsetzbaren Konservierungsmittel verwendet werden. Beispielhaft genannt seien Dichlorophen, Isothiazolene wie 1,2-Benzisothiazol-3(2H)-on, 2-Methyl-2H-isothiazol-3-on-Hydrochlorid, 5-Chlor-2-(4-chlorbenzyl)-3(2H)-isothiazolon, 5-Chlor-2-methyl-2H-isothiazol-3-on, 5-Chlor-2-methyl-2H-isothiazol-3-on, 5-Chlor-2-methyl-2H-isothiazol-3-on-Hydrochlorid, 4,5-Dichlor-2-cyclohexyl-4-isothiazolin-3-on, 4,5-Dichlor-2-octyl-2H-isothiazol-3-on, 2-Methyl-2H-isothiazol-3-on, 2-Methyl-2H-isothiazol-3-on-Calciumchlorid-Komplex, 2-Octyl-2H-isothiazol-3-on und Benzylalkoholhemiformal.

Kleber/Haftmittel gibt man zu zur Verbesserung der Adhäsion der wirksamen Bestandteile auf dem Saatgut nach Behandlung. Geeignete Kleber sind oberflächenaktive Blockcopolymere auf Basis von EO/PO, aber auch Polyvinylalkohole, Polyvinylpyrrolidone, Polyacrylate, Polymethacrylate, Polybutene, Polyisobutene, Polystyrol, Polyethylenamine, Polyethylenamide, Polyethyleneimine (Lupasol®, Polymin®), Polyether und Copolymere, die von diesen Polymeren abgeleitet sind.

Besondere Formulierungen für die Behandlung von Saatgut sind Saatgutbeschichtungsformulierungen. Diese enthalten in der Regel wenigstens einen speziellen Hilfsstoff, der zur Ausbildung einer zweckmäßigen Beschichtung der Samen dient. Die obengenannten Kleber bzw. Haftmittel können hierzu in Kombination mit nichtklebenden Adsorbentien eingesetzt werden. Entsprechende Adsorbentien wie die oben beschriebenen Trägerstoffe sind dem Fachmann geläufig.

### Beispiele

Die folgenden Beispiele dienen zur Veranschaulichung der Erfindung und sind nicht in einer sie beschränkenden Weise auszulegen.

### Beispiel 1 - Wirksamkeit bei Erbsen

Saatgut von Erbsen (*Pisum Sativum*) der Sorte Corus wurde in Kleinparzellen-Feldversuchen in Großbritannien mit einer Kiralaxyl , Pyraclostrobin und Triticonazole enthaltenden Mischung so gebeizt, dass pro 100 kg Saatgut 10 g Kiralaxyl, 10 g Pyraclostrobin und 10 g Triticonazole appliziert wurden. Acht Wochen nach Aussaat wurde die Zahl aufgelaufener Pflanzen bestimmt. Die Zahl unbehandelter aufgelaufener Pflanzen wurde mit 100 definiert. Die durchschnittliche relative Zahl aufgelaufener Pflanzen, ermittelt aus vier Wiederholungen der mit oben beschriebener Mischung behandelten Saatguts, betrug 175%.

### Beispiel 2 - Wirksamkeit bei Mais

Saatgut von Mais (*Zea mais*) der Sorte Anjou 290 wurde in Kleinparzellen-Feldversuchen in Frankreich mit einer Kiralaxyl , Pyraclostrobin und Triticonazole enthaltenden Mischung so gebeizt , dass pro 100 kg Saatgut 5 g Kiralaxyl, 5 g Pyraclostrobin und 5 g Triticonazole appliziert wurden. Vier Wochen nach Aussaat wurde die Höhe der Maispflanzen aus vier Wiederholungen bestimmt. Die Höhe der unbehandelten Pflanzen wurde mit 100 definiert. Die durchschnittliche relative Höhe der Maispflanzen des mit der oben beschriebenen Mischung behandelten Saatguts betrug 140%.

### Beispiel 3 - Wirksamkeit bei Weizen

Saatgut von Sommerweizen (*Triticum arvensis*) der Sorte AC Domain wurden in Kleinparzellen-Feldversuchen in Canada mit einer Kiralaxyl , Pyraclostrobin und Triticonazole enthaltenden Mischung so gebeizt, dass pro 100 kg Saatgut 5 g Kiralaxyl, 5 g Pyraclostrobin und 5 g Triticonazole appliziert wurden. Eine Woche nach Aussaat wurde die Zahl der Pflanzen pro Meter Reihe bestimmt. Im unbehandelten Fall wurden durchschnittlich 10,9 Weizenpflanzen pro Reihe ermittelt. Die durchschnittliche Zahl Weizenpflanzen im Fall der Verwendung des mit oben beschriebener Mischung behandelten Saatguts, bestimmt in vier Wiederholungen, betrug 31,3.

## Patentansprüche

1. Verfahren zum Schutz einer Pflanze vor einem Phytopathogen, ausgewählt unter den Gattungen *Pythium, Rhizoctonia, Tilletia, Ustilago, Peronospora, Pseudoperonospora, Plasmopara, Alternaria, Cercospora, Drechslera, Fusarium* und *Verticillium,*
**dadurch gekennzeichnet, dass** man Saatgut der Pflanze mit
A) Kiralaxyl der Formel I 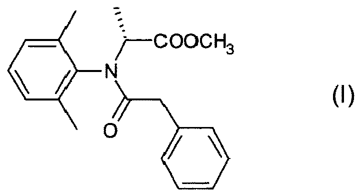 in Kombination mit
B) dem Insektizid Fipronil
behandelt.

2. Verfahren nach Anspruch 1, **dadurch gekennzeichnet, dass** es Schutz vor folgenden Pathogenen an folgenden Pflanzen vermittelt:
- die Pflanze ausgewählt unter Gemüse, Raps, Zuckerrüben, Obst und Reis, falls das Phytopathogen eine *Alternaria-*Art ist;
- die Pflanze ausgewählt unter Mais und Getreide, falls das Phytopathogen eine *Drechslera-*Art ist,
- die Pflanze ausgewählt unter Mais, Sojabohnen, Reis und Zuckerrüben, falls das Phytopathogen eine *Cercospora-*Art ist,
- die Pflanze ausgewählt unter Gräsern, Hülsenfrüchten, Pfeffer, Raps, Gurken, Bananen und Solanaceen wie Tomaten, Kartoffeln und Auberginen, falls das Phytopathogen eine *Fusarium-*Art ist,
- die Pflanze ausgewählt unter Gräsern, Hülsenfrüchten, Pfeffer und Solanaceen wie Tomaten, Kartoffeln und Auberginen, falls das Phytopathogen eine *Verticillium-*Art ist;
- die Pflanze ausgewählt unter Sojabohnen, Gemüse und Sorghum, falls das Phytopathogen eine *Peronospora-* und *Pseudoperonospora-*Art,
- die Pflanze ausgewählt unter Sonnenblumen, falls das Phytopathogen eine *Plasmopara-*Art ist,
- die Pflanze ausgewählt unter Rasengräsern, Reis, Mais, Baumwolle, Raps, Sonnenblumen, Zuckerrüben und Gemüse, falls das Phytopathogen eine *Pythium-*Art ist,
- die Pflanze ausgewählt unter Baumwolle, Reis, Kartoffeln, Rasengräsern, Mais,
Raps, Kartoffeln, Zuckerrüben und Gemüse, falls das Phytopathogen eine *Rhizoctonia-*Art ist,
- die Pflanze ausgewählt unter Getreide, falls das Phytopathogen eine *Tilletia-*Art ist, oder
- die Pflanze ausgewählt unter Getreide, Mais und Zuckerrüben, falls das
Phytopathogen eine *Ustilago-*Art ist.

3. Verfahren nach einem der vorhergehenden Ansprüche, **dadurch gekennzeichnet, dass** man Kiralaxyl und Fipronil gleichzeitig oder nacheinander appliziert.

4. Verwendung von
A) Kiralaxyl der Formel I 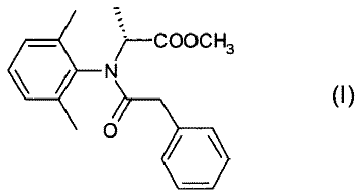 in Kombination mit
B) dem Insektizid Fipronil,
zur Behandlung von Saatgut einer Pflanze zum Schutz der Pflanze vor einem Phytopathogen, ausgewählt unter den Gattungen *Pythium, Rhizoctonia, Tilletia, Ustilago, Peronospora, Pseudoperonospora, Plasmopara, Alternaria, Cercospora, Drechslera, Fusarium* und *Verticillium.*

5. Mittel zur Behandlung von Saatgut einer Pflanze zum Schutz der Pflanze vor einem Phytopathogen, ausgewählt unter den Gattungen *Pythium, Rhizoctonia, Tilletia, Ustilago, Peronospora, Pseudoperonospora, Plasmopara, Alternaria, Cercospora, Drechslera, Fusarium* und *Verticillium,* wobei das Mittel umfasst:
A) Kiralaxyl der Formel I 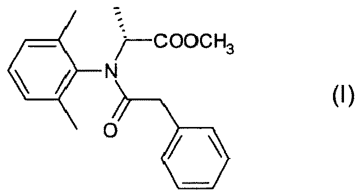 in Kombination mit
B) dem Insektizid Fipronil.

6. Mittel nach Anspruch 5 in Form einer Zusammensetzung, umfassend Kiralaxyl der Formel I und Fipronil.

7. Mittel nach Anspruch 5 in Form eines Kits, umfassend eine erste Komponente, welche Kiralaxyl der Formel I enthält, und eine weitere Komponente, welche Fipronil enthält.
